# EUROPEAN PATENT SPECIFICATION

(11) **EP 2 141 861 B1**
(45) Date of publication and mention of the grant of the patent: **29.08.2012**
(21) Application number: 08425466.3
(22) Date of filing: 04.07.2008
(51) Int. Cl.: H04L 12/24, H04L 29/14

(54) **Method for distributing the execution of a management application in a communication network**
Verfahren zum Verteilen der Ausführung einer Verwaltungsanwendung in einem Kommunikationsnetzwerk
Procédé pour la distribution de l'exécution d'une application de gestion dans un réseau de communications

(43) Date of publication of application: 06.01.2010
(73) Proprietor: Alcatel Lucent, 75007 Paris (FR)
(72) Inventor: Donadio, Pasquale, 80129 Napoli (IT); Paparella, Andrea, 21052 Busto Arsizio (IT); Riglietti, Roberto, 20059 Vimercate (IT)
(74) Representative: Schmidt, Werner Karl

(56) References cited:
- US-A1- 2002 133 583
- NEHRA N; PATEL R B; BHAT V K: "Load balancing with fault tolerance and optimal resource utilization in grid computing" INFORMATION TECHNOLOGY JOURNAL, [Online] vol. 6, no. 6, 15 August 2007 (2007-08-15), pages 784-797, XP002506747 Pakistan Retrieved from the Internet: URL:http://www.ansijournals.com/itj/2007/7 84-797.pdf> [retrieved on 2008-12-03]
- LIOTTA A ET AL: "Modelling network and system monitoring over the Internet with mobile agents" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, vol. 2, 15 February 1998 (1998-02-15), pages 303-312, XP010267404 ISBN: 978-0-7803-4351-1
- GAVALAS D ET AL: "Hierarchical network management: a scalable and dynamic mobile agent-based approach", COMPUTER NETWORKS, ELSEVIER SCIENCE PUBLISHERS B.V., AMSTERDAM, NL, vol. 38, no. 6, 22 April 2002 (2002-04-22) , pages 693-711, XP004345777, ISSN: 1389-1286
- SAHAI A ET AL: "Enabling a mobile network manager (MNM) through mobile agents", MOBILE AGENTS. SECOND INTERNATIONAL WORKSHOP, MA'98. PROCEEDINGS, STUTTGART, GERMANY, 9-11 SEPT. 1998 (IN: LECTURE NOTES IN COMPUTER SCIENCE),, 9 September 1998 (1998-09-09), pages 249-260, XP007911925, ISBN: 978-3-540-64959-5

## Description

### Technical Field

The present invention relates to the field of communication network management. In particular, the present invention relates to a method for distributing the execution of a management operation in a communication network. Further, the present invention relates to a network element and a communication system for performing the above method.

### Background Art

As it is known, managing a communication network provides to perform a number of operations (which are termed "management operations" in the following description), such as for instance:
- monitoring network performance;
- configuring network elements and their resources (boards, ports, cross-connections, etc.);
- managing errors occurring in the network; etc.

Typically, the management operations are performed by an apparatus which is termed "network management station or system" (or, briefly, NMS), which is connected to each network element of the network to be managed.

In particular, the NMS is capable of executing one or more management applications, each application being configured to perform a corresponding management operation on one or more network elements of the communication network.

In order to communicate with the network elements with the aim of performing management operations, the NMS is provided with a software application which is termed "manager", capable of exchanging information with software applications which are termed "agent", which agents are placed at the network elements. Manager and agents exchange each other management information by using a management protocol, which is dependent on the type of communication network. Examples of management protocols are SNMP (Simple Network Management Protocol), CMIP (Common Management Information Protocol), Q3 and TL1.

US 2002/133583 A1 discloses an apparatus for allocating the performance of applications in a networking chassis among one or more modules in the chassis. In particular, the system acts as a chassis agent for performing network management functions. The agent performs a discovery function whereby each module discovers the location and current utilization of resources and applications for itself and transmits that information to other modules, and wherein each module maintains a slot table of such information for all modules.

Nehra N. et al.: "Load balancing with fault tolerance and optimal resource utilization in grid computing", Information Technology Journal, [online] vol. 6, no. 6, 15 August 2007, pages 784-797 discloses a technique for load balancing with optimal resources utilization and fault tolerance in grid computing.

Liotta A. et al.: "Modeling network and system monitoring over Internet with mobile agents", Network Operations and Management Symposium, 1998, IEEE New Orleans, LA, USA, vol. 2, 15 February 1998, pages 303-312 discloses use of mobile agents to distribute and delegate management tasks. A dynamic, hierarchical management model based on a delegation paradigm is adopted and an MA-architecture for monitoring operations is disclosed.

Gavalas D. et al.: "Hierarchical Network Management: a scalable and dynamic mobile agent-based approach", Computer Networks 38 (2002), pages 693-711 discloses a hierarchical agent-based infrastructure suitable for the management of large-scale enterprise networks. The transition to hierarchical agent-based management Is achieved through a mid-level manager that being a Mobile Agent, operates at an intermediary level between the manager and the legacy system and takes full control of managing a given network segment.

### Summary of the Invention

The Applicant has noticed that current network elements have a remarkable amount of calculation resources (i.e. processor power and memory area), which is rarely entirely used.

In fact, the amount of calculation resources of a network element is typically dimensioned by assuming a maximum computation load situation, i.e. a situation in which all the resources of the network element are operating.

This involves that, at present, a network element can comprise some tens of processors (e.g. 30), which are entirely used only in situations of maximum computation load. However, these situations rarely occur. Therefore, a certain amount of calculation resources is often present at the network element, which resources could be used for other purposes.

For example, the Applicant has perceived that the calculation resources of the network elements could be used by the NMS for performing management operations. In this way, it would not be more necessary to provide the NMS with an amount of calculation resources allowing it to execute all the management operations, since the network elements would provide their unused calculation resources to partially or totally execute the management applications.

If the execution of the management applications is totally performed by the network elements, the NMS could be replaced with a management terminal having substantially only a management graphic interface, which management terminal allows the operator responsible for performing the management of the communication network to activate the execution of the management application at the network elements and to visualize the results.

For example, among the possible management operations there is the above mentioned network performance monitoring operation, which consists in collecting the parameters indicating the performance of the network elements at the NMS. When the operator decides to carry out this operation, he activates a corresponding management application at the NMS, which application requests the network elements to receive the parameters indicating their performance.

In the case of a communication network where the network elements are responsible for executing some service applications, when the operator decides to carry out the performance monitoring operation, he transmits a command to the network elements by means of the management terminal, each network element executing a respective management application by transmitting to the management terminal the parameters indicating its performance.

At each network element, the management application may be executed by a determined processor, which is specifically responsible for executing the management applications.

If such a processor is subjected to a failure, or if the whole network element is subjected to a failure, the network element is no more capable of providing the management terminal with the parameters indicating its performance. Therefore, disadvantageously, the management information collected at the management terminal do not allow the operator to determine network element performance.

This drawback could be overcome by providing each network element with a primary processor and a secondary processor, which are responsible for executing the management applications. In condition of normal operation of the network element, the primary processor executes the management applications, whereas the secondary processor is inactive. In the event of a failure at the primary processor, the secondary processor becomes active, and continues to execute the management applications.

However, this solution is expensive, as it would be necessary to provide with a double processor all the network elements of a communication network, which network elements can be some thousands.

Therefore, the Applicant has faced the problem of providing a method for distributing the execution of a management application in a communication network which overcomes the above mentioned problem, i.e. which is capable of ensuring the execution of the management operation to be completed, also when the processor responsible of executing the management applications of a network element is subjected to a failure, while being less expensive than the above solution consisting in duplicating such processor.

According to a first aspect, the present invention provides a method for distributing, among calculation resources of network elements of a communication network, the execution of management applications responsible for performing management operations upon the network elements, the management operations comprising at least one of the following:
- monitoring performance of the network elements of the communication network;
- configuring the network elements; and
- managing errors occurring in the communication network,
the calculation resources having associated respective distribution applications, the method comprising the following steps, performed by each of the distribution applications:
a) determining whether the associated calculation resource is available for executing one of the management applications;
b) in case the calculation resource is available, using the calculation resource for executing the management application;
c) in case the calculation resource becomes unavailable, determining whether a further calculation resource is available among the calculation resources to continue execution of the management application; and
d) in the affirmative, continuing execution of the management application by using the further calculation resource.

Preferably, the method further comprises, before step c), defining a distribution group including a network element and a further network element of the network elements.

Preferably, step c) comprises exchanging between the network element and the further network element signaling messages indicating whether the resource and the further resource are available.

Profitably, step c) comprises determining whether a bandwidth is available on a link between the network element and the further network element, and generating further signaling messages indicating whether the bandwidth is available on the link.

Preferably, step c) comprises determining whether the further calculation resource is available among the calculation resources by processing at least one of the signaling messages and the further signaling messages.

Preferably, the resource and the further resource are comprised in a hardware module of a same network element and step a) comprises determining whether the calculation resource is available at a given board of the hardware module, the hardware module comprising at least a further board, and, in case the calculation resource is available at the given board, step b) comprises using the given board for executing the management application.

Profitably, step c) comprises exchanging between the given board and the further board still further signaling messages indicating whether the resource and the further resource are available.

Preferably, step c) comprises determining whether the further calculation resource is available at the further board by processing the still further signaling messages.

According to a second aspect, the present invention provides a communication system comprising a communication network and a management terminal connected to the communication network, the communication network being adapted to perform the method as set forth above.

### Brief description of the drawings

The present invention will be better understood by reading the following detailed description, given by way of example and not of limitation, to be read by referring to the accompanying drawings, wherein:
- Figure 1 schematically shows a communication network having a management system;
- Figure 2 shows in more detail the structure of a network element of the communication network of Figure 1, according to a first embodiment of the present invention; and
- Figure 3 shows in more detail the structure of a network element of the network of Figure 1, according to a second embodiment of the present invention.

### Detailed description of preferred embodiments of the invention

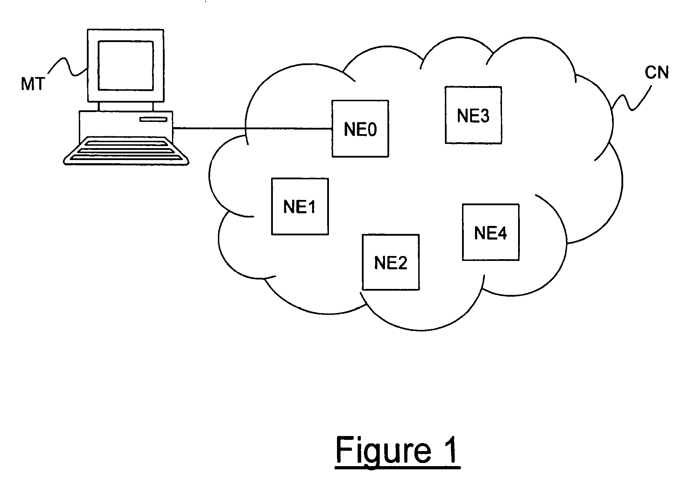

Figure 1 schematically shows a communication network CN comprising a plurality of network elements. For simplicity, only five network elements NEO, NE1, ..., NE4 are shown in Figure 1. For simplicity, the connections between the network elements are not shown in Figure 1.

Preferably, the communication network CN is connected to a management terminal MT, which is suitable for executing a displaying program of a management graphic interface, which allows the operator responsible for performing the communication network management to activate the execution of the management application at the network elements NE0, NE1, ..., NE4, and to visualize its results. The management terminal MT is preferably connected to one of the network elements of the communication network CN, e.g. the network element NE0, as shown in Figure 1.

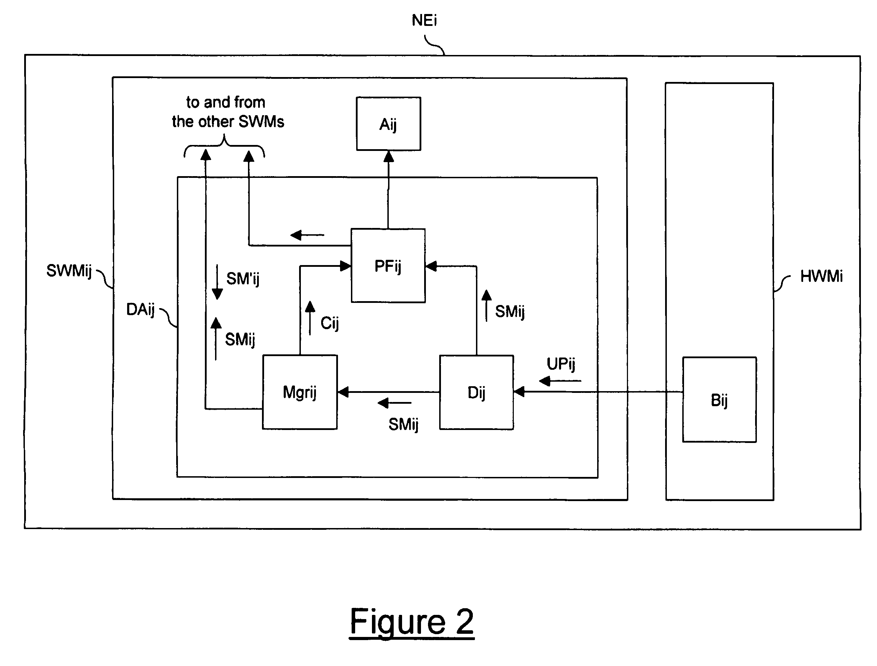

Figure 2 shows in more detail the structure of the network elements NE0, NE1, ..., NE4 of the communication network CN. Preferably, since the structure of these network elements is substantially the same, the structure of a generic network element NEi, where the index i can be 0, 1, 2, 3 or 4, is shown in Figure 2.

The network element NEi preferably comprises a hardware module HWMi.

Preferably, the hardware module HWMi comprises a plurality of boards. For simplicity, Figure 2 shows a single exemplary board Bij. Preferably, the board Bij comprises a set of calculation resources, such as a processor, a RAM memory, and possibly a permanent memory.

Preferably, for each board of the hardware module HWMi, the network element NEi comprises a respective software module SWMij, which is suitable for being executed by the board Bij.

Preferably, the software module SWij comprises a plurality of applications, each application being capable of performing a certain operation, when it is executed. For simplicity, the software module SWMij shown in Figure 2 comprises a single management application Aij. It is assumed that the application Aij is a management application, i.e. it is suitable for performing a management operation. For example, the management application Aij can be suitable for performing the above mentioned performance monitoring operation, or an alarm monitoring operation.

According to embodiments of the present invention, the software module SWMij associated to the board Bij further comprises a distribution application DAij.

Preferably, the distribution application DAij comprises a calculation resource use detector Dij, a distribution manager Mgrij, and a process forwarder PFij.

Preferably, the calculation resource use detector Dij is configured to detect in a substantially continuous way the use percentage UPij of the calculation resources of the board Bij, which use percentage UPij generally varies with time according to the variations of the quantity of information that the board Bij has to process. In particular, the calculation resource use detector Dij is capable of detecting the use percentage of the processor, the use percentage of the RAM, and the filling percentage of the permanent memory included in the board Bij. Preferably, the detector Dij is configured to compare these percentages with respective thresholds and to determine, based on the comparison results, if the calculation resources of the board Bij are totally used or they are at least partially free. In the first case, the detector Dij preferably assigns to the board Bij a state BOARD OVERLOADED, whereas in the second case the detector Dij preferably assigns to the board Bij a state BOARD UNDERLOADED. Moreover, preferably, in the event in which a board is broken, the detector Dij is configured to assign a state BOARD OVERLOADED thereto, since, also in this situation, the board Bij is not capable of providing any calculation resource. Further, the detector Dij is configured to transmit to the distribution manager Mgrij and to the process forwarder PFij a signaling message SMij of the type "Board State Change", when the board Bij changes its state from BOARD OVERLOADED to BOARD UNDERLOADED or vice versa.

Preferably, the distribution manager Mgrij is suitable for receiving from the detector Dij any signaling messages SMij of the type "Board State Change", indicating state changes of the board Bij. Further preferably, the distribution manager Mgrij is suitable for forwarding to the distribution applications associated to the other boards of the hardware module HWMi the signaling messages SMij of the type "Board State Change" received from the detector Dij, thereby updating the other distribution applications of the network element NEi about the possible availability of calculation resources at the board Bij. Further preferably, the distribution manager Mgrij is capable of receiving from the distribution applications associated to the other boards of the hardware module HWMi signaling messages SM'ij of the type "Board State Change", which update it about the possible availability of calculation resources at the other boards of the hardware module HWMi.

Preferably, the distribution manager Mgrij is capable of processing the signaling messages SMij to determine if the board Bij has some calculation resource available for executing the management application Aij. If so (state BOARD UNDERLOADED), the distribution manager Mgrij is capable of transmitting a corresponding command Cij to the process forwarder PFij, which then assigns the execution of the service applications to the calculation resources of the board Bij. On the contrary, if the manager Mgrij determines that there are no calculation resources available at the board Bij (state BOARD OVERLOADED), it preferably processes the signaling messages SM'ij received from the other distribution applications residing at the network element NEi for determining whether there is another board of the hardware module HWMi, to which the execution of the application Aij can be assigned. If so, the manager Mgrij preferably transmits a corresponding command Cij to the process forwarder PFij.

Preferably, the process forwarder PFij is configured to receive the command Cij from the distribution manager Mgrij and to interact with the management application Aij to cause it is executed by means of the board determined by the distribution manager Mgrij.

It is assumed, for example, that the operator responsible of managing the communication network CN wishes to carry out the monitoring of the performance of the network element NE2.

For simplicity, it is assumed that the network element NE2 comprises only two boards B21 and B22, with their respective software modules SWM21 and SWM22. In particular, the performance monitoring operation of the network element NE2 is performed by a management application A21 included in the software module SWM21, which is suitable for being executed by the board B21.

When the operator requests to perform the above operation, he preferably transmits to the network element NE2 through the management terminal MT a request of executing the management application A21.

The calculation resource use detector D21 is detecting the use percentages of the board B21, and it is transmitting to the distribution manager Mgr21 any signaling messages SM21 of the type "Board State Change", which signaling messages SM21 indicate any state changes of the board B21. If the board B21 is in the state BOARD UNDERLOADED, the distribution manager Mgr21 determines to assign the execution of the management application A21 to the board B21, and transmits a corresponding command C21 to the process forwarder PF21. Then, the application A21 begins to be executed by the board B21.

If at a certain instant the board B21 is subjected to a failure, the calculation resource use detector D21 detects that there are no more calculation resources available at the board B21 and thus transmits to the distribution manager Mgr21 a signaling message SM21 of the type "Board State Change" to notify that the board B21 is passed from the state BOARD UNDERLOADED to the state BOARD OVERLOADED.

Upon reception of the signaling message SM21, the distribution manager Mgr21 processes the signaling messages SM'21 to determine if, within the network element NE2, there is a board having a state BOARD UNDERLOADED, to which the execution of the application A21 can be assigned. If so (i.e. in this example, if the board B22 fulfills this requirement), the manager Mgr21 preferably transmits to the process forwarder PF21 a command C21 to move the execution of the management application A21 from the board B21 to the selected board (i.e. B22).

Further preferably, the manager Mgr21 of the distribution application DA21 transmits to the manager Mgr22 of the distribution application DA21 a signaling message of the type "Delegate Application", which informs the manager Mgr22 that the execution of the monitoring operation of the performance of the network element NE2 will be assigned to the board B22.

Then, preferably, the manager Mgr22 allocates at the board B22 the resources necessary for executing the management application A21 and waits for receiving from the distribution application DA21 input data to execute the management application A21.

Then, preferably, the process forwarder PF21 of the distribution application DA21 transmits to the process forwarder PF22 of the distribution application DA22 input data to execute the management application A21 at the board B22.

Therefore, advantageously, according to this first embodiment of the present invention, the network element NE2 is capable of completing the monitoring operation of its own performance, even if the board initially responsible of executing the management application A21 is subjected to a failure, without requiring to provide any duplication of the processor configured to execute the management applications at the network element.

In fact, owing to the presence of the distribution applications, it is possible to identify other boards having unused calculation resources, which can be employed to execute the management application A21, and thus can complete the performance monitoring operation.

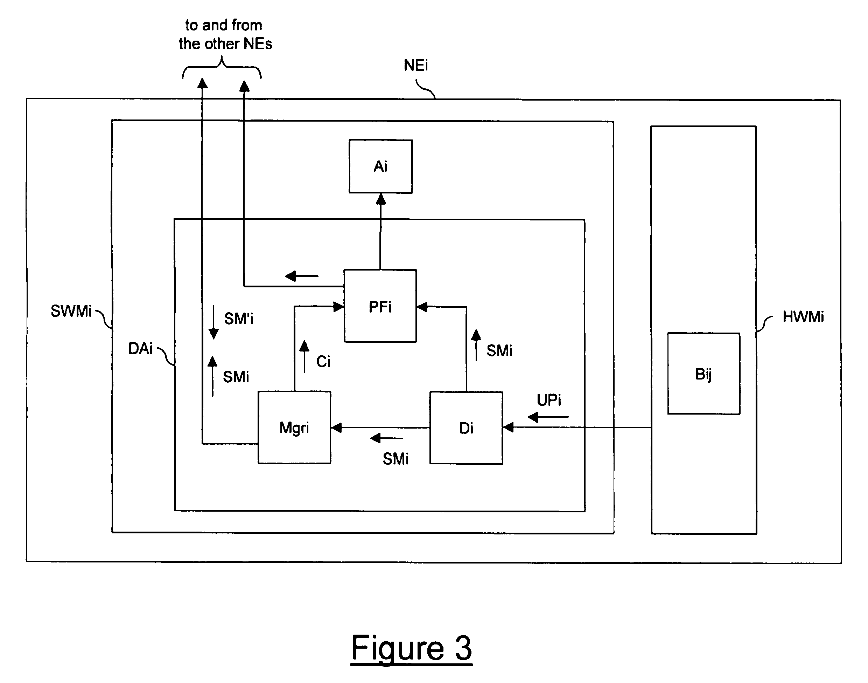

Figure 3 shows in more detail the structure of the network elements NE0, NE1, ..., NE4 of the communication network CN, according to a second embodiment of the present invention. Preferably, since the structure of these network elements is substantially the same, the structure of a generic network element NEi, where the index i can be 0, 1, 2, 3 or 4, is shown in Figure 3.

By comparing Figure 2 and Figure 3, the network element NEi according to this second embodiment of the present invention differs from the network element NEi according to the first embodiment in that it comprises a software module SWMi, instead of the software modules SWMij of Figure 2.

According to this second embodiment, the software module SWMi comprises at least one application Ai and a distribution application DAi, which are suitable for being executed by the boards included in the hardware module HWMi.

Preferably, the distribution application DAi according to the second embodiment comprises a calculation resource use detector Di, a distribution manager Mgri, and a process forwarder PFi.

Preferably, the calculation resource use detector Di according to this second embodiment of the present invention is configured to detect in a substantially continuous way the use percentage UPi of the calculation resources of each board of the hardware module HWMi, and to process it, thereby assigning to the hardware module HWMi a state HW OVERLOADED or a state HW UNDERLOADED.

Preferably, if at least one of the boards of the hardware module HWMi has available calculation resources, the detector Di preferably assigns to the hardware module HWMi a state HW UNDERLOADED. On the contrary, if none of the boards of the hardware module HWMi has available calculation resources, the detector Di preferably assigns a state HW OVERLOADED to the hardware module HWMi of the network element NEi.

Preferably, according to this second embodiment of the present invention, the network element NEi forms, together with other network elements of the communication network CN, a distribution group. As it will be discussed in more detail below, the distribution group can be defined by the operator responsible of managing the communication network CN.

Preferably, according to this second embodiment, the detector Di is configured to detect the bandwidth available on the links between the network element NEi and the other network elements of the communication network CN belonging to the distribution group. Moreover, preferably, the detector Di is configured to compare the bandwidth available on each link with respective thresholds to determine, based on the comparison results, if the bandwidth available on the link is totally used or it is at least partially free. In the first case, the detector Di preferably assigns to the link a state LINK OVERLOADED, whereas in the second case the detector Di preferably assigns to the link a state LINK UNDERLOADED. Further preferably, in the event in which a link is broken, the detector Di is configured to assign a state LINK OVERLOADED thereto, since, also in this situation, the link does not provide any bandwidth.

Further, the detector Di is configured to transmit to the distribution manager Mgri and to the process forwarder PFi a signaling message SMi of the type "HW State Change", when the hardware module HWMi changes its state from HW OVERLOADED to HW UNDERLOADED or vice versa. Further preferably, the detector Di is configured to transmit to the distribution manager Mgri and to the process forwarder PFi a signaling message SMi of the type "Link State Change", when one of the links between the network element NEi and one of the other network elements of the distribution group changes its state from LINK OVERLOADED to LINK UNDERLOADED or vice versa.

Preferably, the distribution manager Mgri is suitable for receiving from the detector Di any signaling messages SMi of the type "HW State Change" and of the type "Link State Change".

Further preferably, the distribution manager Mgri is suitable for forwarding to the distribution managers of the other network elements belonging to the distribution group the signaling messages SMi of the type "HW State Change" received from the detector Di, thereby updating the other network elements of the distribution group with reference to the possible availability of calculation resources at the network element NEi.

Further preferably, the distribution manager Mgri is capable of receiving from the distribution managers of the other network elements belonging to the distribution group signaling messages SM'i of the type "HW State Change", which update it about the possible availability of calculation resources at the other network elements belonging to the same distribution group.

Preferably, the distribution manager Mgri is capable of processing the signaling messages SMi of the type "HW State Change" to determine if the network element NEi has some calculation resource available for executing the application Ai. If so (state HW UNDERLOADED), the distribution manager Mgri is configured to transmit a corresponding command Ci to the process forwarder PFi, which then assigns the execution of the service application Ai to one of the boards of the hardware module HWMi. On the contrary, if the manager Mgri determines that there are no calculation resources available at the network element NEi (state HW OVERLOADED), it preferably processes the signaling messages SM'i of the type "HW State Change" and SMi of the type "Link State Change" to determine if there is a network element different from NEi, and belonging to the distribution group, to which the execution of the application Ai can be assigned. If so, the manager Mgri preferably transmits a corresponding command Ci to the process forwarder PFi, which then assigns the execution of the application Ai to this network element, as it will be described in more detail below, with reference to the following example.

As above, it is assumed by way of example that the operator responsible of managing the communication network CN wishes to carry out the monitoring of the performance of the network element NE2.

Besides, it is assumed that the performance monitoring operation of the network element NE2 is performed by a management application A2 included in the software module SWM2, which is suitable for being executed by one of the boards of the hardware module HWM2. Further, it is assumed that the network elements NE0, NE1, ..., NE4 shown in Figure 1 form a distribution group.

When the operator requests to perform the above operation, he preferably transmits to the network element NE2 through the management terminal MT a request of executing the management application A2.

By assuming that the distribution application DA2 is active at the network element NE2, the calculation resource use detector D2 is detecting the use percentages of the boards of the hardware module HWM2, and it is transmitting to the distribution manager Mgr2 possibile signaling messages SM2 of the type "HW State Change", which signaling messages SM2 signal any state changes of the hardware module HWM2. Further, the manager Mgr2 is receiving from the other network elements NE0, NE1, NE3, and NE4 signaling messages SM'2 of the type "HW State Change", indicating their respective states.

If network elements NE0, NE1, ..., NE4 are all in the state HW UNDERLOADED, the distribution manager Mgr2 preferably determines to assign to one of the boards of the hardware module HWM2 the execution of the management application A2, and it transmits to the process forwarder PF2 a corresponding command C2. Then, the application A2 starts to be executed by the hardware module HWM2.

If at a certain instant the hardware module HWM2 is subjected to a failure, the calculation resource use percentage detector D2 detects that there are no more calculation resources available at the hardware module HWM2 and then transmits a signaling message SM2 of the type "HW State Change" to the distribution manager Mgr2 to notify that the hardware module HWM2 is passed from the state HW UNDERLOADED to the state HW OVERLOADED. Consequently, the distribution manager Mgr2 processes the signaling messages SM2 and SM'2 to determine if, among the network elements NE0, NE1, NE3 and NE4 of the distribution group, there is a network element having a state HW UNDERLOADED, which is connected to the network element NE2 through a link having a state LINK UNDERLOADED. If so, the manager Mgr2 preferably transmits to the process forwarder PF2 a command C2 to move the execution of the management application A2 from the hardware module HWM2 to the selected network element (e.g. NE3).

Further preferably, the manager Mgr2 of the network element NE2 transmits to the manager Mgr3 of the network element NE3 a signaling message of the type "Delegate Application", which informs the manager Mgr3 that the execution of the monitoring operation of the performance of the network element NE2 will be assigned thereto.

Then, preferably, the manager Mgr3 allocates at anyone of the board of the hardware module HWM3 the resources necessary for executing the management application A3 (i.e., the local application corresponding to the application A2) and waits for receiving from the network element NE2 input data to execute the management application A2.

Then, preferably, the process forwarder PF2 of the network element NE2 transmits to the process forwarder PF3 of the network element NE3 input data to execute the management application A3 at the network element NE3. Preferably, in addition to the input data, the process forwarder PF2 of the network element NE2 transmits to the process forwarder PF3 of the network element NE3 also the following data:
- an its own identifier, which preferably comprises: the IP address to which the process forwarder PF2 can be reached, and a list of the TCP/IP ports to use for exchanging information during the execution of the service application A3,
- its own options, comprising information which are used by the process forwarder PF3 to initialize the management application A3 in a correct way; and
- synchronized data, if any.

When the process forwarder PF3 receives the above information from the process forwarder PF2, it preferably starts the execution of the management application A3 at anyone of the boards of its hardware module HWM3 and, if necessary, it continues to cooperate with the process forwarder PF2 to complete the execution.

Therefore, advantageously, also according to this second embodiment of the present invention, the monitoring operation of the performance of the network element NE2 can be completed even if the network element NE2 which is locally performing the management application A2 is subjected to a failure, without requiring to provide any duplication of the processor configured to perform the management applications at the network element.

In fact, owing to the presence of the distribution application, it is possible to detect any other network elements having unused calculation resources, which can be assigned to the execution of a local management application corresponding to the management application A2, and that thus can complete the monitoring operation of the performance of the network element NE2.

Preferably, the composition of the distribution group can be modified by the operator responsible of managing. In this case, preferably, the network element managers exchange each other a signaling message "Distribution Group Change" to update all network elements involved in the change ordered by the operator.

According to other advantageous variants of this second embodiment of the present invention, the interfaces between the calculation resource managers of different network elements and the interfaces between the process forwarders of different network elements are based on the XML (eXtensible Markup Language) format.

Moreover, according to preferred variants of this second embodiment, the implementation of the coordination mechanisms among managers of different network elements involves the use of the SCTP (Stream Control Transmission Protocol) protocol, which advantageously supports the multi-streaming and the priority assigning mechanisms. This allows different flows of messages to be transmitted in parallel, e.g. in the event in which a manager of a network element has to transmit to all network elements of the same distribution group respective signaling messages to signal a state change of its hardware module HWMi.

Further preferably, according to this second embodiment it is possible to provide a protection mechanism of the distribution application DAi, by associating to the management application Ai present in a network element NEi a primary distribution application DAi, suitable for being locally executed in the network element NEi, and a spare distribution application DAi(s), suitable for being executed at another network element belonging to the same distribution group of NEi. Therefore, in the event of an interruption of the primary distribution application DAi (e.g. owing to a failure of the hardware module HWMi of the network element NEi, or owing to a software problem, such as the presence of a virus), the distribution of the execution of the application Ai present in the network element NEi is advantageously performed in a remote way by the secondary distribution application DAi(s).

Further advantageously, the distribution mechanism above described is compatible with conventional network elements, which do not support a distribution application DAi like the one above described.

According to embodiments not shown in the drawings, a network element NEi can comprise both a distribution application DAij for each bards Bij of its hardware module HWMi (similary to what shown in Figure 2) and a distribution application DAi like the one shown in Figure 3. Preferably, the distribution application DAi cooperates with the distribution applications DAij of the various boards Bij. In this case, advantageously, the distribution applications DAij manage the calculation resource allocation within the network element NEi, whereas the distribution application DAi manages the calculation resource allocation within the distribution group.

Then, if the management application Aij is performed by a certain board of the network element NEi (e.g., Bij), and this board is subjected to a failure, firstly the manager Mgrij of the distribution application DAij intervenes, which determines whether other boards of the hardware module HWMi have available calculation resources, to which the execution of the management application Aij can be assigned. In a negative, the manager Mgri of the distribution application DAi intervenes, which preferably determines whether there are other network elements in the same distribution group of NEi having available calculation resources, to which the execution of the management application corresponding to the management application Aij can be assigned.

Preferably, according to this embodiment, the detector Dij of the distribution application DAij is capable of transmitting signaling messages of the type "Board State Change" (indicating any state changes of each board Bij) to the detector Di of the distribution application DAi which, based on them, assigns the state HW UNDERLOADED or HW OVERLOADED to the whole hardware module HWMi.

Similarly, according to this second embodiment, when the manager Mgri of the distribution application DAi receives a command to execute a management application from a manager of a distribution application of another network element of the same distribution group, the manager Mgri preferably transmits the command to the managers Mgrij of the distribution applications DAij, which preferably determine to which board Bij the execution has to be assigned.

## Claims

1. A method for distributing, among calculation resources (Bij, HWMi) of network elements (NE0, NE1, ..., NE4) of a communication network (CN), the execution of management applications (Aij, Ai) responsible for performing management operations upon said network elements (NE0, NE1, ..., NE4), said management operations comprising at least one of the following:
- monitoring performance of said network elements (NE0, NE1, ..., NE4) of said communication network (CN);
- configuring said network elements (NEO, NE1, ..., NE4); and
- managing errors occurring in said communication network (CN),
said calculation resources (Bij, HWMi) having associated respective distribution applications (DAi, DAij), said method comprising the following steps, performed by each of said distribution applications (DAi, DAij):
a) determining whether the associated calculation resource (Bij, HWMi) is available for executing one of said management applications (Aij, Ai);
b) in case said calculation resource (Bij, HWMi) is available, using said calculation resource (Bij, HWMi) for executing said management application (Aij, Ai);
c) in case said calculation resource (Bij, HWMi) becomes unavailable, determining whether a further calculation resource is available among said calculation resources to continue execution of said management application (Aij, Ai); and
d) in the affirmative, continuing execution of said management application (Aij; Ai) by using said further calculation resource.

2. The method according to claim 1, wherein it further comprises, before said step c), defining a distribution group including a network element (NEi) and a further network element of said network elements (NE0, NE1, ..., NE4).

3. The method according to claim 2, wherein said step c) comprises exchanging between said network element (NEi) and said further network element signaling messages (SM'i) indicating whether said resource (Bij, HWMi) and said further resource are available.

4. The method according to any of claims 2 or 3, wherein said step c) comprises determining whether a bandwidth is available on a link between said network element (NEi) and said further network element, and generating further signaling messages (SMi) indicating whether said bandwidth is available on said link.

5. The method according to claim 3 or 4, wherein said step c) comprises determining whether said further calculation resource is available among said calculation resources by processing at least one of said signaling messages (SM'i) and said further signaling messages (SMi).

6. The method according to any of the preceding claims, wherein said resource and said further resource are comprised in a hardware module of a same network element (NEi) and wherein said step a) comprises determining whether said calculation resource is available at a given board (Bij) of said hardware module (HWi), said hardware module (HWi) comprising at least a further board, and wherein, in case said calculation resource is available at said given board (Bij), said step b) comprises using said given board (Bij) for executing said management application (Aij, Ai).

7. The method according to claim 6, wherein said step c) comprises exchanging between said given board (Bij) and said further board still further signaling messages (SM'ij) indicating whether said resource and said further resource are available.

8. The method according to claim 7, wherein said step c) comprises determining whether said further calculation resource is available at said further board by processing said still further signaling messages (SM'ij).

9. A communication system comprising a communication network (CN) and a management terminal (MT) connected to said communication network (CN), the communication network (CN) comprising a plurality of network elements (NEφ,NE1,...NE4) having calculation resource (Big, HWMi), said calculation resource (Big, HWMi) having associated respective distribution applications (DAi, DAiz), each of said distribution application (DAi, DAij) being adapted to perform all the steps of the method according to any of the preceding claims.

## Patentansprüche

1. Verfahren zum Verteilen, unter Berechnungsressourcen (Bij, HWMi) von Netzwerkelementen (NEO, NE1, ..., NE4) eines Kommunikationsnetzwerks (CN), der Ausführung von Verwaltungsanwendungen (Aij, Ai), die für das Durchführen von Verwaltungsvorgängen an den besagten Netzwerkelementen (NEO, NE1, ..., NE4) zuständig sind, wobei die besagten Verwaltungsvorgänge umfassen:
- Überwachen der Leistung der besagten Netzwerkelemente (NEO, NE1, ..., NE4) des besagten Kommunikationsnetzwerks (CN);
- Konfigurieren der besagten Netzwerkelemente (NEO, NE1, ..., NE4); und
- Verwalten von in dem besagten Kommunikationsnetzwerk (CN) auftretenden Fehlern,
wobei die besagten Berechnungsressourcen (Bij, HWMi) jeweils zugeordnete Verteilanwendungen (DAi, DAij) haben, wobei das Verfahren die folgenden von einer jeden der besagten Verteilanwendungen (DAi, DAij) ausgeführten Schritte umfasst:
a) Ermitteln, ob die zugeordnete Berechnungsressource (Bij, HWMi) für das Ausführen einer der besagten Verwaltungsanwendungen (Aij, Ai) verfügbar ist;
b) wenn die besagte Berechnungsressource (Bij, HWMi) verfügbar ist, Verwenden der besagten Berechnungsressource (Bij, HWMi) zum Ausführen der besagten Verwaltungsanwendung (Aij, Ai);
c) wenn die besagte Berechnungsressource (Bij, HWMi) nicht mehr verfügbar ist, Ermitteln, ob eine weitere Berechnungsressource unter den besagten Berechnungsressourcen verfügbar ist, um die Ausführung der besagten Verwaltungsanwendung (Aij, Ai) fortzusetzen; und
d) wenn dies der Fall ist, Fortsetzen der Ausführung der besagten Verwaltungsanwendung (Aij; Ai) unter Verwendung der besagten weiteren Berechnungsressource.

2. Verfahren nach Anspruch 1, weiterhin umfassend, vor dem besagten Schritt c), das Definieren einer Verteilgruppe, welche ein Netzwerkelement (NEi) und ein weiteres Netzwerkelement der besagten Netzwerkelemente (NEO, NE1,..., NE4) umfasst.

3. Verfahren nach Anspruch 2, wobei der besagte Schritt c) das Austauschen von Signalisierungsnachrichten (SM'i), welche angeben, ob die besagte Ressource (Bij, HWMi) und die besagte weitere Ressource verfügbar sind, zwischen dem besagten Netzwerkelement (NEi) und dem besagten weiteren Netzwerkelement umfasst.

4. Verfahren nach einem beliebigen der Ansprüche 2 oder 3, wobei der besagte Schritt c) das Ermitteln, ob eine Bandbreite auf einer Verbindungsstrecke zwischen dem besagten Netzwerkelement (NEi) und dem besagten weiteren Netzwerkelement verfügbar ist, sowie das Erzeugen weiterer Signalisierungsnachrichten (SMi), welche angeben, ob die besagte Bandbreite verfügbar ist, umfasst.

5. Verfahren nach Anspruch 3 oder 4, wobei der besagte Schritt c) das Ermitteln, ob die besagte weitere Berechnungsressource unter den besagten Berechnungsressourcen verfügbar ist, durch Verarbeiten mindestens einer der besagten Signalisierungsnachrichten (SM'i) und der besagten weiteren Signalisierungsnachrichten (SMi) umfasst.

6. Verfahren nach einem beliebigen der vorstehenden Ansprüche, wobei die besagte Ressource und die besagten weiteren Ressourcen in einem Hardware-Modul eines selben Netzwerkelements (NEi) enthalten sind, und wobei der besagte Schritt a) das Ermitteln, ob die besagte Berechnungsressource an einem gegebenen Board (Bij) des besagten Hardware-Moduls (HWi) verfügbar ist, umfasst, wobei das besagte Hardware-Modul (HWi) mindestens ein weiteres Board umfasst, und wobei, wenn die besagte Berechnungsressource an dem besagten gegebenen Board (Bij) verfügbar ist, der besagte Schritt b) das Verwenden des besagten gegebenen Boards (Bij) zum Ausführen der besagten Verwaltungsanwendung (Aij, Ai) umfasst.

7. Verfahren nach Anspruch 6, wobei der besagte Schritt c) das Austauschen von noch weiteren Signalisierungsnachrichten (SM'ij), welche angeben, ob die besagte Ressource und die besagte weitere Ressource verfügbar sind, zwischen dem besagten gegebenen Board (Bij) und dem besagten weiteren Board umfasst.

8. Verfahren nach Anspruch 7, wobei der besagte Schritt c) das Ermitteln, ob die besagte weitere Berechnungsressource an dem besagten weiteren Board verfügbar ist, durch Verarbeiten der besagten noch weiteren Signalisierungsnachrichten (SM'ij) umfasst.

9. Kommunikationssystem, umfassend ein Kommunikationsnetzwerk (CN) und ein Verwaltungsendgerät (MT), welches an das besagte Kommunikationsnetzwerk (CN) angeschlossen ist, wobei das Kommunikationsnetzwerk (CN) eine Mehrzahl von Netzwerkelementen (NEO, NE1, ..., NE4) mit Berechnungsressourcen (Bij, HWMi) umfasst, wobei die besagten Berechnungsressourcen (Bij, HWMi) jeweils zugeordnete Verteilanwendungen (Dai, DAij) haben, wobei eine jede der besagten Verteilanwendungen (Dai, DAij) dazu ausgelegt ist, alle Schritte des Verfahrens gemäß einem beliebigen der vorstehenden Ansprüche durchzuführen.

## Revendications

1. Procédé pour la distribution, parmi des ressources de calcul (Bij, HWMi) d'éléments de réseau (NEO, NE1, ..., NE4) d'un réseau de communication (CN), de l'exécution d'applications de gestion (Aij), Ai) responsables de l'exécution d'opérations de gestion sur lesdits éléments de réseau (NEO, NE1, ..., NE4), lesdites opérations de gestion comprenant au moins une des étapes suivantes :
- surveiller les performances desdits éléments de réseau (NEO, NE1, ..., NE4) dudit réseau de communication (CN) ;
- configurer lesdits éléments de réseau (NEO, NE1, ..., NE4); et
- gérer les erreurs se produisant dans ledit réseau de communication (CN),
lesdites ressources de calcul (Bij, HWMi) ayant des applications de distribution (DAI, DAij) respectives associées, ledit procédé comprenant les étapes suivantes, exécutées par chacune desdites applications de distribution (DAI, DAij) :
a) déterminer si la ressource de calcul (Bij, HWMi) associée est disponible pour exécuter une desdites applications de gestion (Aij, Ai) ;
b) dans le cas où ladite ressource de calcul (Bij, HWMi) est disponible, utiliser ladite ressource de calcul (Bij, HWMi) pour exécuter ladite application de gestion (Aij, Al) ;
c) dans le cas où ladite ressource de calcul (Bij, HWMi) devient indisponible, déterminer si une autre ressource de calcul est disponible parmi lesdites ressources de calcul pour continuer l'exécution de ladite application de gestion (Aij, Ai) ; et
d) si tel est le cas, continuer l'exécution de ladite application de gestion (Aij, Ai) en utilisant ladite autre ressource de calcul.

2. Procédé selon la revendication 1, comprenant en outre, avant ladite étape c), la définition d'un groupe de distribution comprenant un élément de réseau (NEi) et un autre élément de réseau desdits éléments de réseau (NEO, NE1,..., NE4).

3. Procédé selon la revendication 2, dans lequel ladite étape c) comprend l'échange entre ledit élément de réseau (NEi) et ledit autre élément de réseau de messages de signalisation (SM'i) indiquant si ladite ressource (Bij, HWMi) et ladite autre ressource sont disponibles.

4. Procédé selon l'une quelconque des revendications 2 et 3, dans lequel ladite étape c) consiste à déterminer si une bande passante est disponible sur une liaison entre ledit élément de réseau (NEi) et ledit autre élément de réseau, et à générer d'autres messages de signalisation (SMi) indiquant si ladite bande passante est disponible sur ladite liaison.

5. Procédé selon la revendication 3 ou 4, dans lequel ladite étape c) consiste à déterminer si ladite autre ressource de calcul est disponible parmi lesdites ressources de calcul en traitant au moins un desdits messages de signalisation (SM'i) et desdits autres messages de signalisation (SMi).

6. Procédé selon l'une quelconque des revendications précédentes, dans lequel ladite ressource et ladite autre ressource sont comprises dans un module matériel d'un même élément de réseau (NEi) et dans lequel ladite étape a) consiste à déterminer si ladite ressource de calcul est disponible au niveau d'une carte donnée (Bij) dudit module matériel (HWi), ledit module matériel (HWi) comprenant au moins une autre carte, et dans lequel, dans le cas où ladite ressource de calcul est disponible au niveau de ladite carte donnée (Bij), ladite étape b) comprend l'utilisation de ladite carte donnée (Bij) pour exécuter ladite application de gestion (Aij, Ai).

7. Procédé selon la revendication 6, dans lequel ladite étape c) comprend l'échange entre ladite carte donnée (Bij) et ladite autre carte encore d'autres messages de signalisation (SM'ij) indiquant si ladite ressource et ladite autre ressource sont disponibles.

8. Procédé selon la revendication 7, dans lequel ladite étape c) consiste à déterminer si ladite autre ressource de calcul est disponible au niveau de ladite autre carte en traitant lesdits encore autres messages de signalisation (SM'ij).

9. Système de communication comprenant un réseau de communication (CN) et un terminal de gestion (MT) connecté audit réseau de communication (CN), le réseau de communication (CN) comprenant une pluralité d'éléments de réseau (NEO, NE1, ..., NE4) ayant des ressources de calcul (Bij, HWMi), lesdites ressources de calcul (Bij, HWMi) ayant des applications de distribution (Dai, Daij) respectives associées, chacune desdites applications de distribution (Dai, Daij) étant adaptée pour exécuter toutes les étapes du procédé selon l'une quelconque des revendications précédentes.
